**Europäisches Patentamt**

**European Patent Office**

**Office européen des brevets**

(19)

(11) Veröffentlichungsnummer: **0 506 028 A2**

## (12) EUROPÄISCHE PATENTANMELDUNG

(21) Anmeldenummer: **92105158.7**

(22) Anmeldetag: **25.03.92**

(51) Int. Cl.5: **E03F 7/10**, B01D 29/11, B01D 29/60, B01D 36/04

(30) Priorität: **27.03.91 DE 4110158**

(43) Veröffentlichungstag der Anmeldung: **30.09.92 Patentblatt 92/40**

(84) Benannte Vertragsstaaten: **AT BE CH DE DK ES FR GB GR IT LI NL PT SE**

(71) Anmelder: **Klass, Georg, Dipl.-Ing.**
**Moorenweiser Strasse 4**
**W-8087 Türkenfeld(DE)**

(72) Erfinder: **Klass, Georg**
**Moorenweiserstrasse 4**
**W-8087 Türkenfeld(DE)**
Erfinder: **Sinz jun., Helmut**
**Grüntenweg 13**
**W-8999 Scheidegg(DE)**

(74) Vertreter: **Patentanwälte Grünecker,**
**Kinkeldey, Stockmair & Partner**
**Maximilianstrasse 58**
**W-8000 München 22(DE)**

(54) **Reinigungsvorrichtung.**

(57) Die Erfindung betrifft eine vorzugsweise auf Reinigungsfahrzeugen installierte Reinigungsvorrichtung mit einer Einrichtung für die Erzeugung eines Flüssigkeitshochdruckstrahls zum Ablösen und Aufschlämmen von Verunreinigungen. Die dabei erzeugten Aufschlämmungen werden durch eine Absaugeinrichtung abgesaugt und in einem Sammelbehälter gesammelt. Die zum Ablösen und Aufschlämmen von Schmutz verwendete Flüssigkeit wird soweit regeneriert, daß sie der Hochdruckpumpe zur Erzeugung des Hochdruckstrahls wieder zugeführt werden kann. Die Regenerierung erfolgt in einem Strömungsabscheider, in dem von der im Sammelbehälter grob geklärten Flüssigkeit ein Strömungsanteil, der aufbereitete Flüssigkeit enthält, abgezweigt wird. Gemäß der Erfindung ist eine Regelungseinrichtung vorgesehen, durch die die Druckverhältnisse in dem Strömungsabscheider unabhängig von Druckschwankungen in dem Sammelbehälter konstant gehalten werden.

FIG.1

Die Erfindung betrifft eine Reinigungsvorrichtung mit einer Einrichtung für die Erzeugung eines Flüssigkeitshochdruckstrahls zum Ablösen und Aufschlämmen von Verunreinigungen, einer Einrichtung, welche eine Leitung zum Zuführen von durch den Hochdruckstrahl erzeugten Aufschlämmungen und einen mit der Leitung verbundenen Behälter zum Sammeln und Grobklären der Aufschlämmungen aufweist, und einem eine Pumpe und einen Strömungsabscheider umfassenden Strömungskreislauf zum weiteren Aufbereiten der grob geklärten Flüssigkeit, wobei durch den Strömungsabscheider ein über den Kreislauf in den Sammelbehälter rückführbarer, mit Verunreinigungen angereicherter Strömungsanteil und ein der Einrichtung für die Erzeugung eines Hochdruckstrahls zuführbarer Strömungsanteil mit aufbereiteter Flüssigkeit erzeugbar ist.

Eine Reinigungsvorrichtung dieser Art ist aus der EP 85 106 096.2 bekannt. Diese bekannte Reinigungsvorrichtung ist auf einem Reinigungswagen installiert, welcher vorrangig zum Säubern von Schleusen und Abflußkanälen eingesetzt wird. Mit Hilfe einer Hochdruckpumpe, die einem als Strömungsabscheider verwendeten Zyklon aufbereitetes Wasser entnimmt, wird ein unter hohem Druck stehender Reinigungsstrahl erzeugt, mit dem verhärtete Schmutzschichten gelöst und aufgeschlämmt werden können. Zur Absaugung der Aufschlämmungen über eine mit dem Sammelbehälter verbundene Absaugleitung wird in dem Sammelbehälter mittels einer Pumpe ein Unterdruck erzeugt. Ein wesentlicher Vorteil dieses bekannten Reinigungswagens besteht darin, daß das zum Ablösen und Aufschlämmen des Schmutzes benötigte Wasser wenigstens teilweise an Ort und Stelle regeneriert und soweit gesäubert wird, daß es zur Beschickung der Hochdruckpumpe verwendbar und der Betrieb der Hochdruckpumpe nicht durch Schmutzteilchen beeinträchtigt ist. Damit ist der Reinigungswagen über einen langen Betriebszeitraum von einer Frischwasserquelle unabhängig, und durch die weitgehende Wiederverwendung des Wassers ist die für eine komplette Füllung des Sammelbehälters mit Schmutz erforderliche Wassermenge nur sehr gering. Nachteilig bei diesem bekannten Reinigungswagen sind häufige Störungen in der Erzeugung des aufbereiteten Wassers, so daß der Hochdruckpumpe die erforderliche Wassermenge nicht gleichmäßig und in der erforderlichen Reinheit zur Erzeugung des Hochdruckstrahls zur Verfügung steht.

Es ist die Aufgabe der vorliegenden Erfindung, eine Reinigungsvorrichtung der eingangs erwähnten Art zu schaffen, die gegenüber diesem Stand der Technik verbessert ist.

Die erfindungsgemäße Reinigungsvorrichtung ist dadurch gekennzeichnet, daß eine Einrichtung zur Regelung des Flüssigkeitsdrucks in dem Strömungsabscheider vorgesehen ist.

Durch diese erfindungsgemäße Lösung wird erreicht, daß unabhängig vom Druckzustand in dem Sammelbehälter, der sich, je nachdem, ob Schlamm abgesaugt wird oder nicht, ändern kann, stets die gleichen Druckverhältnisse, und insbesondere eine konstante Druckdifferenz zwischen dem Flüssigkeitsdruck auf der Strömungsseite der grob geklärten Flüssigkeit und auf der Strömungsseite der aufbereiteten Flüssigkeit vorliegt.

In vorteilhafter Ausgestaltung der Erfindung kann vorgesehen sein, daß der Ausgang des Strömungsabscheiders für die aufbereitete Flüssigkeit mit einem eine Puffermenge von aufbereiteter Flüssigkeit enthaltenden Druckspeicher verbunden ist. Ein solcher Druckspeicher ist insbesondere dann vorteilhaft, wenn der Strömungsabscheider einen Querstromfilter enthält, der sich mit Schmutzteilchen zusetzen kann, wodurch es neben einem Druckanstieg auf der Strömungsseite der grob geklärten Flüssigkeit auf der Strömungsseite für die aufbereitete Flüssigkeit ohne diesen Druckspeicher zu einem Druckabfall kommen würde. Obwohl der Druck auf der Strömungsseite der grob geklärten Flüssigkeit erfindungsgemäß durch Regelung konstant gehalten wird, würde sich durch diesen Druckabfall trotzdem eine unerwünscht hohe Druckdifferenz ergeben, die das Zusetzen des Filters weiter fördert. Sieht man für die Druckregelung auf der Strömungsseite der grob geklärten Flüssigkeit eine geeignete Überregelung derart vor, daß der geregelte Druck kurzfristig unter den Sollwert und auch noch unter den Druck im Druckspeicher abfällt, so kann durch den Druckspeicher eine vorteilhafte, das Querstromfilter freispülende Rückströmung erzeugt werden.

In weiterer vorteilhafter Ausgestaltung der Erfindung kann zwischen dem Strömungsabscheider und der Hochdruckpumpe ein Rückschlagventil vorgesehen sein, das erst öffnet, wenn ein vorbestimmter Flüssigkeitsdruck der aufbereiteten Flüssigkeit erreicht ist. Damit kann einerseits gesichert werden, daß die aufbereitete Flüssigkeit einen für die Hochdruckpumpe zweckmäßigen Eingangsdruck aufweist, andererseits ist im Anfahrprozeß gewährleistet, daß die Hochdruckpumpe dem Strömungsabscheider erst dann aufbereitete Flüssigkeit entnimmt, wenn der Strömungsabscheider seinen normalen Betriebszustand und damit seine maximale Reinigungswirkung erreicht hat. Im Normalbetrieb sorgt das Rückschlagventil für einen geeigneten Strömungswiderstand in der Zuleitung zu der Hochdruckpumpe, welcher für eine Verteilung des Druckabfalls derart sorgt, daß sich über dem Querstromfilter die gewünschte Druckdifferenz ergibt.

In einem bevorzugten Ausführungsbeispiel für die Erfindung weist der Strömungsabscheider einen Zyklon mit einem darin angeordneten Querstromfilter auf. Auf der Eintrittseite des Querstromfilters ist ein Drucksensor angeordnet, der ein Regelungssignal für ein Regelventil erzeugt, welches zur Druckregelung den Strömungswiderstand in dem Rücklauf für die mit Verunreinigungen angereicherte Flüssigkeit verändert. Wenn sich z.B. der Druck in dem Sammelbehälter, der sich dem Pumpendruck in dem Strömungskreislauf überlagert, ändert, führt dies zu einer Druckänderung in dem Strömungsabscheider, welche von dem Drucksensor registriert wird. Indem der Strömungswiderstand im Rücklauf für die mit Verunreinigungen angereicherte Flüssigkeit durch das Regelventil entsprechend verändert wird, kann eine Ausregelung durch Druckänderungen im Sammelbehälter verursachter Druckschwankungen im Strömungsabscheider erfolgen.

Weitere vorteilhafte Ausgestaltungsmöglichkeiten der Erfindung gehen aus den Unteransprüchen hervor.

Die Erfindung soll nun anhand von Ausführungsbeispielen und der sich auf diese Ausführungsbeispiele beziehenden Zeichnungen näher erläutert und beschrieben werden. Es zeigen:

Fig.1    ein erstes Ausführungsbeispiel für eine erfindungsgemäße Reinigungsvorrichtung,

Fig.2    ein Ausführungsbeispiel für einen bei einer erfindungsgemäßen Reinigungsvorrichtung verwendbaren Strömungsabscheider, und

Fig.3    ein zweites Ausführungsbeispiel für eine erfindungsgemäße Reinigungsvorrichtung.

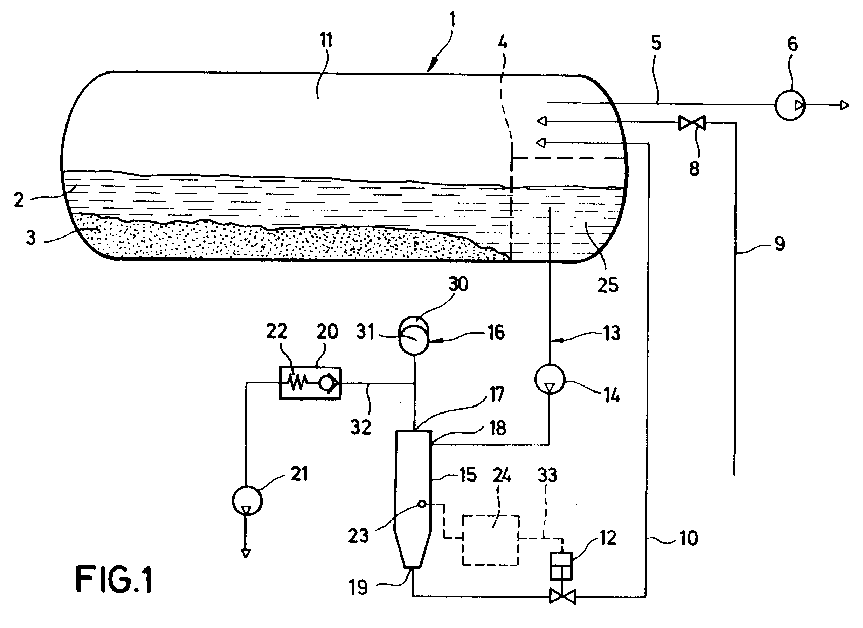

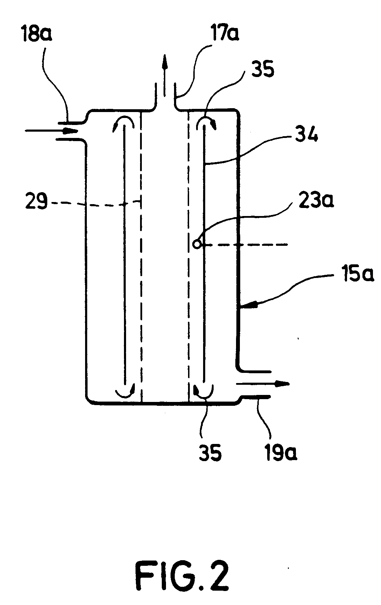

Mit dem Bezugszeichen 1 ist in der Figur 1 ein Sammelbehälter mit einem Innenraum 11 bezeichnet, an den eine Saugleitung 9 zum Aufsaugen von Schmutzaufschlämmungen mit einem in dieser Leitung angeordneten Ventil 8 angeschlossen ist. Aus der in dem Behälter 1 gesammelten Schmutzaufschlämmung hat sich ein fester Bodensatz 3 abgesetzt, über dem eine Flüssigkeitsschicht 2 von im vorliegenden Fall grob geklärtem Wasser liegt. Innerhalb des Sammelbehälters 1 ist ein separater Innenraum 25 durch eine als Sieb ausgebildete Trennwand 4 gebildet. An den separaten Raum 25 des Sammelbehälters 1 ist eine Leitung 13 angeschlossen, die mit dem Eingang einer Strömungspumpe 14, im vorliegenden Ausführungsbeispiel einer Kreiselpumpe, verbunden ist. Der Ausgang der Strömungspumpe 14 ist mit einem Eingang 18 eines Strömungsabscheiders 15 verbunden. Bei dem Strömungsabscheider 15 handelt es sich um einen Zyklon mit einem darin angeordneten Querstromfilter. Ein derartiger Strömungsabscheider wird später anhand der Figur 2 genauer erläutert. Ein Ausgang 19 des Strömungsabscheiders, durch den mit Schmutzfracht angereicherte Flüssigkeit austritt, ist über eine Rückflußleitung 10, in der ein Regelventil 12 angeordnet ist, mit dem Sammelbehälter 1 verbunden. Im vorliegenden Ausführungsbeispiel liegt die Verbindungsstelle der Rückflußleitung 10 mit dem Sammelbehälter 1 oberhalb des Flüssigkeitsspiegels der grob geklärten Flüssigkeit.

Ein Ausgang 17 des Strömungsabscheiders für den Austritt von aufbereiteter Flüssigkeit ist mit einem Druckspeicher 16 verbunden, der eine Puffermenge 31 an aufbereiteter Flüssigkeit enthält. Auf den Flüssigkeitsspiegel wirkt eine zwischen dem Flüssigkeitsspiegel und der Behälterwand des Druckspeichers eingeschlossene Gasmenge 30. Zwischen dem Ausgang 17 des Strömungsabscheider 15 und dem Druckspeicher 16 zweigt eine Leitung 32 ab, über die der Ausgang 17 des Strömungsabscheiders für das aufbereitete Wasser mit einer Hochdruckpumpe 21 zur Erzeugung eines Reinigungsstrahls verbunden ist. Als Hochdruckpumpe wird im vorliegenden Ausführungsbeispiel eine Kolbenpumpe verwendet. In der Verbindungsleitung 32 ist ein Rückschlagventil 20 vorgesehen. Das Rückschlagventil weist ein durch eine Feder 22 beaufschlagtes Verschlußteil auf, das einen Durchfluß durch das Ventil nur dann ermöglicht, wenn ein vorbestimmter, durch die Federkraft bestimmter Flüssigkeitsdruck, darauf einwirkt.

Mit dem Bezugszeichen 6 ist eine Pumpe bezeichnet, die über eine Leitung 5 mit dem Sammelbehälter 1 verbunden ist, wobei die Verbindungsstelle oberhalb des Flüssigkeitsspiegels der grob geklärten Flüssigkeit 2 angeordnet ist. Durch die Pumpe 6 ist Luft aus dem Sammelbehälter 1 absaugbar.

In dem Strömungsabscheider ist ein Drucksensor 23 für die Messung des Flüssigkeitsdrucks in der Strömung durch den Strömungsabscheider vorgesehen. Der Drucksensor ist mit einer Regelungseinrichtung 24 verbunden, die ihrerseits über eine Steuersignalleitung 33 mit dem Regelventil 12 verbunden ist.

Bei dem in der Figur 2 gezeigten Strömungsabscheider 15a, der in einer Reinigungsvorrichtung gemäß der Figur 1 verwendet werden kann, handelt es sich um einen Zyklon, in dem ein Querstromfilter 29 angeordnet ist. An einem Ende des zylindrisch vorgesehenen Zyklons ist ein Eingang 18a für den tangentialen Eintritt grob geklärter Flüssigkeit vorgesehen. Am gegenüberliegenden Ende ist ein Austritt 19a für den vorzugsweise tangentialen Austritt von mit Schmutzfracht angereicherter Flüssigkeit vorgesehen. Koaxial zur Längsachse des Zyklons und dem Querstromfilter 29 ist eine Strömungsleitwand 34 vorgesehen, an deren Enden ringförmige Schlitze 35 für den Ein- bzw. Austritt von Flüssigkeit in den Ringraum zwischen Querstromfilter und Strömungsleitwand zwischen den Enden und den Stirnwänden des Zyklons gebildet sind. Koaxial zur Zylinderlängsachse des Zyklons ist ein Ausgang 17a für aufbereitete, aus der Durchlaufströmung zwischen dem Eintritt 18a und dem Austritt 19a abgeschiedene und durch den Querstromfilter 29 hindurchgetretene Flüssigkeit vorgesehen. Mit 23a ist ein Drucksensor bezeichnet, der im vorliegenden Ausführungsbeispiel, etwa in der Längsmitte des Zyklons zwischen dem Querstromfilter 29 und der Strömungsleitwand 34 angeordnet ist. Der Drucksensor könnte auch an einer anderen Stelle als der Längsmitte des Zyklons zwischen dem Querstromfilter 29 und der Strömungsleitwand 34 oder zwischen der Strömungsleitwand 34 und der Wand des Zyklons angeordnet sein.

Beim Betrieb der Reinigungseinrichtung saugt die Strömungspumpe 14 in der Leitung 13 grob geklärte Flüssigkeit aus dem Raum 25 des Sammelbehälters 1 ab. Die den separaten Raum 25 bildende Siebwand 4 sorgt dafür, daß in den Teilraum 25 keine groben Schmutzteilchen eintreten können, durch die die Pumpe 14 in ihrer Funktion beeinträchtigt wird. Die durch die Pumpe 14 geförderte Flüssigkeit durchläuft den Strömungsabscheider 15, in welchem es zu einer Strömungsaufteilung in einen mit Schmutzfracht angereicherten Strömungsanteil, der durch den Ausgang 19, bzw. 19a austritt, und einen Strömungsanteil mit aufbereiteter Flüssigkeit, der durch den Ausgang 17 bzw. 17a austritt, kommt. Während der mit Schmutzfracht angereicherte Strömungsanteil über die Rücklaufleitung 10 in den Sammelbehälter 1 zurückgeführt wird, entnimmt die Hochdruckpumpe 21 dem Ausgang 17 bzw. 17a aufbereitete Flüssigkeit und erzeugt einen Hochdruckstrahl, mit dem verfestigte Schmutzbeläge abgelöst und aufgeschlämmt werden können.

Die aufgeschlämmten Schmutzbeläge können über die Absaugleitung 9 in den Behälter gesaugt werden. Dazu wird über die Pumpe 6 in dem Behälter ein Unterdruck erzeugt. Bei gegebenem Unterdruck wird zum Absaugen der durch den Hochdruckstrahl erzeugten Schmutzaufschlämmung das Ventil 8 geöffnet bzw. zur Beendigung des Absaugvorganges geschlossen.

Indem das zum Ablösen und Aufschlämmen verwendete Wasser wenigstens teilweise regeneriert wird, um durch die Hochdruckpumpe verarbeitet werden zu können, kann die Reinigungsvorrichtung lange Zeit ohne Frischwasserzufuhr betrieben werden, was sich besonders vorteilhaft auswirkt, wenn die Vorrichtung auf einem Reinigungsfahrzeug, das in einem weiten Umkreis von einer Basisstation operieren muß, installiert wird.

Die Aufbereitung des grob geklärten Wassers in dem Zyklon erfolgt dadurch, daß durch den tangentialen Eintritt der Flüssigkeit innerhalb des zylindrischen Zyklons eine spiralförmige Strömung der grob geklärten Flüssigkeit mit einer axialen und tangentialen Komponente erzeugt wird. Durch die tangentiale Komponente der Strömung wandern schwere Schmutzteilchen während des Durchgangs durch den Zyklon, bedingt durch die Zentrifugalkraft, in den Bereich der Strömung nahe der Zylinderwand und reichern sich dort an. An dem dem Eintritt 18a gegenüberliegenden Ende des Zyklons kommt es zu einer Strömungsaufteilung, wobei die Strömungsanteile nahe der Zylinderwand, die mit Schmutzfracht angereichert sind, durch den Austritt 19a austreten, während sich ein weiter geklärter Strömungsanteil in Richtung zur Zylinderachse des Zyklons und dann entgegengesetzt zur axialen Komponente der Strömung der grob geklärten Flüssigkeit zwischen dem Querstromfilter 29 und der Strömungsleitwand 34 und nach Durchtritt durch das Querstromfilter 29 axial zu dem Ausgang 17a hin bewegt. Innerhalb des zylindrischen Querstromfilters 29 befindet sich ein Volumen von aufbereiteter Flüssigkeit, aus dem die Hochdruckpumpe 21 gespeist werden kann.

Bei der Aufbereitung von Flüssigkeit und Förderung durch die Hochdruckpumpe 21 könnte es zu Störungen in der Gleichmäßigkeit der Aufbereitung von Flüssigkeit in dem Strömungsabscheider 15 kommen, wenn nicht gemäß der vorliegenden Erfindung über den Drucksensor 23, die Regelungseinrichtung 24 und das Regelventil 12 eine Regelung der Druckverhältnisse im Strömungsabscheider erfolgen würde. Durch den Saugbetrieb, und insbesondere durch Unterbrechungen des Saugbetriebes treten erhebliche Druckschwankungen in dem Sammelbehälter auf. Der Druck in dem Sammelbehälter kann zwischen dem äußeren Luftdruck $1 \cdot 10^5$ Pa (1 bar) und einem Druck von $0,1 \cdot 10^5$ Pa (0,1) bar schwanken. Solche Druckschwankungen wirken sich unmittelbar auf die Druckverhältnisse in dem Strömungsabscheider aus, indem sich diese Druckschwankungen dem durch die Strömungspumpe 14 erzeugten Arbeitsdruck von ca. maximal 1,3 bar überlagern. Andererseits würde die Hochdruckpumpe 21 unabhängig von den Druckschwankungen in dem Sammelbehälter eine konstante Menge an aufbereiteter Flüssigkeit fördern, was zu einer Veränderung der Druckverhältnisse im Strömungsabscheider und damit zu einer Veränderung der Erzeugungsrate an aufbereitetem Wasser führt. Insbesondere kann es durch solche Veränderungen der Strömungs- und Druckverhältnisse im Strömungsabscheider dazu kommen, daß sich der Querstromfilter mit Schmutzteilchen zusetzt und damit die Erzeugung von aufbereitetem Wasser für die Hochdruckpumpe unterbrochen ist.

Bei dem in der Figur 1 gezeigten Ausführungsbeispiel für eine Reinigungseinrichtung wird die Erzeugung von aufbereiteter Flüssigkeit für die Hochdruckpumpe wie folgt geregelt. Der Drucksensor 23 erfaßt den Flüssigkeitsdruck innerhalb des Strömungsabscheiders, im vorliegenden Ausführungsbeispiel einem Strömungsabscheider mit einem Querstromfilter, wobei die Druckmessung auf der Eintrittseite des Querstromfilters erfolgt. Entsprechend den möglichen Schwankungen des Drucks im Sammelbehälter 1 könnte der Druck an der Meßstelle schwanken. Derartige Schwankungen werden aber dadurch ausgeregelt, daß der Drucksensor Druckschwankungen ermittelt und die Regelungseinrichtung 24 entsprechende Stellsignale für das Regelventil 12 erzeugt, das den Strömungswiderstand der Rücklaufleitung 10 so verändert, daß an der Meßstelle ein konstanter, d.h. innerhalb vorbestimmter Grenzen um einen konstanten Druckwert schwankender, Druck aufrechterhalten wird. Damit herrschen im Strömungsabscheider weitgehend konstante Strömungsverhältnisse bei einer konstanten Erzeugungsrate von aufbereitetem Wasser für die Hochdruckpumpe. Der durch den Drucksensor 23 zu erfassende Sollwert und die Anordnung des Drucksensors innerhalb des Strömungsabscheiders oder durch in Strömungsrichtung unterhalb oder oberhalb des Strömungsabscheiders können so gewählt werden, daß sich optimale Arbeitspunkte des Strömungsabscheiders 15 und der Strömungspumpe 14 einstellen. Der optimale Arbeitspunkt der Strömungspumpe 14 ist dann erreicht, wenn bei minimaler Energiezufuhr die größtmögliche Förderleistung erreicht wird.

Bei geregelten Druckwerten auf der Eintrittseite des Strömungsabscheiders könnte es ohne den Druckspeicher 16 dennoch zu Druckdifferenzen zwischen dem Flüssigkeitsdruck der aufbereiteten Flüssigkeit und dem Flüssigkeitsdruck der grob geklärten bzw. mit Schmutzfracht angereicherten Flüssigkeit kommen, indem sich z.B. durch übermäßige Schmutzbefrachtung der Flüssigkeit oder durch Schmutzteilchen bestimmter Form und Größe der Querstromfilter zusetzt. In diesem Fall ergäbe sich ein Druckabfall in der aufbereiteten Flüssigkeit, wobei die sich dadurch erhöhende Druckdifferenz zwischen den beiden Seiten des Querstromfilters die Neigung zum Zusetzen sogar noch weiter verstärken würde. Indem vorteilhaft der Druckspeicher 30 mit der Puffermenge 31 an aufbereiteter Flüssigkeit vorgesehen ist, wird ein solcher Druckabfall aber weitgehend verhindert. Somit trägt der Druckspeicher neben der Regelung des Drucks auf der Eintrittseite des Querstromfilters dazu bei, daß sich das Querstromfilter nicht mit Schmutzteilchen zusetzt. Wird eine geeignete Überregelung gewählt und der Druck auf der Eintrittseite, der ohne Regelung bei sich zusetzendem Querstromfilter ansteigen würde, kurzfristig auf einen Wert unter dem Druck im Druckspeicher heruntergeregelt, so kann der Druckspeicher vorteilhaft eine das Querstromfilter freispülende Rückströmung erzeugen. Eine solche Freispülung erfolgt auch immer dann, wenn die Strömungspumpe abgeschaltet wird.

Das Rückschlagventil 20 sorgt dafür, daß der Flüssigkeitsdruck an der Eingangsseite der Hochdruckpumpe stets oberhalb eines gewünschten Minimalwertes bleibt. Im Anfahrbetrieb sorgt dieses Rückschlagventil dafür, daß die Hochdruckpumpe erst dann mit aufbereiteter Flüssigkeit versorgt wird, wenn sich ein zum Betrieb der Hochdruckpumpe zweckmäßiger Eingangsdruck in der aufbereiteten Flüssigkeit aufgebaut hat. Dieser Druckaufbau ist dann abgeschlossen, wenn der Druckspeicher mit der Puffermenge 31 an aufbereitetem Wasser gefüllt und die Druckluft 30 in dem Druckspeicher den erforderlichen Druck aufweist, der zum Öffnen des federbeaufschlagten Rückschlagventils 20 erforderlich ist. Im normalen Betriebszustand sorgt das Rückschlagventil 20 für einen Strömungwiderstand, der zu einer geeigneten Verteilung des Druckabfalls derart führt, daß sich über dem Querstromfilter die gewünschte Druckdifferenz ergibt.

Im Anfahrbetrieb wird das Regelventil 12 zunächst voll geöffnet und dafür gesorgt, daß sich der Drucksollwert unter Vermeidung hoher Druckdifferenzen über dem Querstromfilter langsam aufbaut, womit gleichzeitig eine Freispülung des gegebenenfalls zugesetzten Filters erreicht werden kann.

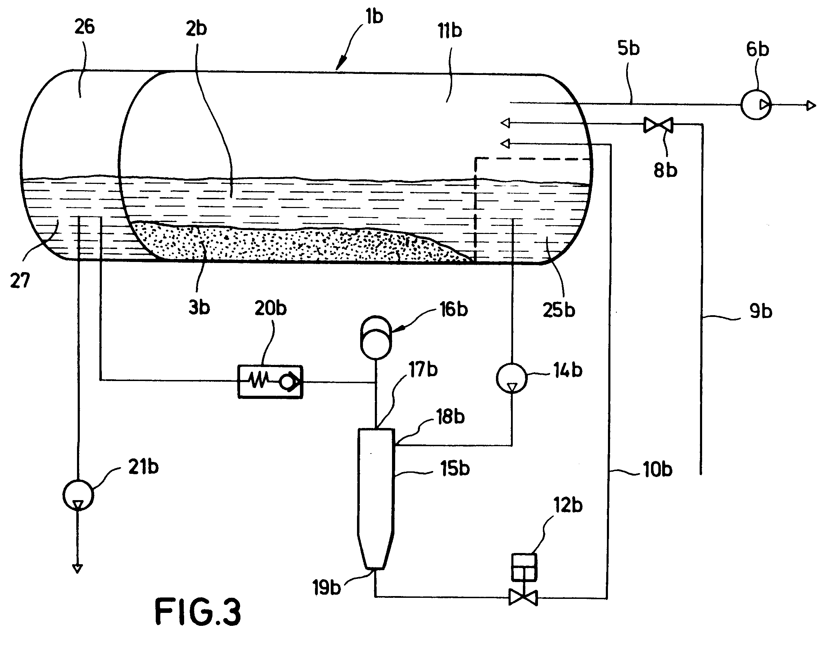

Bei dem in Figur 3 gezeigten Ausführungsbeispiel sind gleiche oder gleich wirkende Teile mit der gleichen, jedoch mit dem Index b versehenen Bezugszahl wie in der Figur 1 bezeichnet. Das Ausführungsbeispiel gemäß Figur 3 unterscheidet sich von dem Ausführungsbeispiel gemäß Figur 1 darin, daß ein Vorratsbehälter 26 für eine Vorratsmenge 27 an aufbereitetem Wasser vorgesehen ist. Durch diese Vorratsmenge an aufbereitetem Wasser ist gewährleistet, daß auch im Anfahrbetrieb des Strömungsabscheiders 15b für die Hochdruckpumpe 21b aufbereitetes Wasser zur Verfügung steht, so daß ohne stabile Strömungsverhältnisse im Strömungsabscheider abwarten zu müssen, sofort mit der Erzeugung eines Hochdruckstrahls begonnen werden kann.

**Patentansprüche**

1. Reinigungsvorrichtung mit

   einer Einrichtung für die Erzeugung eines Flüssigkeitshochdruckstrahls zum Ablösen und Aufschlämmen von Verunreinigungen;

   einer Einrichtung, welche eine Leitung (9) zum Zuführen von durch den Hochdruckstrahl erzeugten Aufschlämmungen und einen mit der Leitung verbundenen Behälter (1) zum Sammeln und Grobklären der Aufschlämmung aufweist, und

einem eine Pumpe und einen Strömungsabscheider umfassenden Strömungskreislauf zum weiteren Aufbereiten der grob geklärten Flüssigkeit, wobei durch den Strömungsabscheider ein über den Kreislauf in den Sammelbehälter rückführbarer, mit Verunreinigungen angereicherter Strömungsanteil und ein der Einrichtung für die Erzeugung eines Hochdruckstrahls zuführbarer Strömungsanteil mit aufbereiteter Flüssigkeit erzeugbar ist, **dadurch gekennzeichnet**, daß eine Einrichtung zur Regelung des Flüssigkeitsdrucks in dem Strömungsabscheider vorgesehen ist.

2. Vorrichtung nach Anspruch 1, **dadurch gekennzeichnet**, daß die Leitung eine Saugleitung zum Absaugen der durch den Hochdruckstrahl erzeugten Aufschlämmungen ist.

3. Vorrichtung nach Anspruch 1 oder 2, **dadurch gekennzeichnet**, daß der Strömungsabscheider (15) einen Zyklon oder/und Querstromfilter umfaßt.

4. Vorrichtung nach einem der Ansprüche 1 bis 3, **dadurch gekennzeichnet**, daß die Regelungseinrichtung einen in bezug auf den Strömungsabscheider auf der mit Schmutz angereicherten Seite angeordneten Drucksensor aufweist.

5. Vorrichtung nach einem der Ansprüche 1 bis 5, **dadurch gekennzeichnet**, daß die Regelungseinrichtung einen auf der Eintrittseite des Querstromfilters angeordneten Drucksensor aufweist.

6. Vorrichtung nach einem der Ansprüche 1 bis 5, **dadurch gekennzeichnet**, daß die Regelungseinrichtung ein in dem Strömungskreislauf hinter dem Strömungsabscheider (15) angeordnetes Regelventil (12) umfaßt.

7. Vorrichtung nach einem der Ansprüche 1 bis 6, **dadurch gekennzeichnet**, daß die Pumpe (14) in dem Strömungskreislauf eine Strömungspumpe ist.

8. Vorrichtung nach Anspruch 7, **dadurch gekennzeichnet**, daß die Strömungspumpe (14) eine Kreiselpumpe ist.

9. Vorrichtung nach einem der Ansprüche 1 bis 8, **dadurch gekennzeichnet**, daß der Strömungsabscheider (15) an seinem Ausgang für die aufbereitete Flüssigkeit mit einem eine Puffermenge (31) aufbereiteter Flüssigkeit enthaltenden Druckspeicher (16) verbunden ist.

10. Vorrichtung nach einem der Ansprüche 1 bis 9, **dadurch gekennzeichnet**, daß der Strömungsabscheider (15) mit der Einrichtung (21) für die Erzeugung des Hochdruckstrahls über ein gegen den Flüssigkeitsdruck der aufbereiteten Flüssigkeit aus dem Strömungsabscheider beaufschlagtes Rückschlagventil (20) verbunden ist.

11. Vorrichtung nach einem der Ansprüche 1 bis 10, **dadurch gekennzeichnet**, daß die Einrichtung (21) für die Erzeugung des Hochdruckstrahls mit dem Strömungsabscheider über einen Zwischenspeicher (26) für aufbereitete Flüssigkeit verbunden ist.

12. Vorrichtung nach Anspruch 11, **dadurch gekennzeichnet**, daß das Rückschlagventil (20) dem Zwischenspeicher (26) vorgeschaltet ist.

13. Reinigungsfahrzeug mit einer Reinigungsvorrichtung nach einem der Ansprüche 1 bis 12.

**FIG.1**

EP 0 506 028 A2

# FIG.2

FIG.3